# EUROPÄISCHE PATENTSCHRIFT

(11) **EP 2 441 369 B1**
(45) Veröffentlichungstag und Bekanntmachung des Hinweises auf die Patenterteilung: **08.01.2020**
(21) Anmeldenummer: 11184761.2
(22) Anmeldetag: 12.10.2011
(51) Int. Cl.: A47L 15/23, A47L 15/42, A47L 15/50, F16L 37/098

(54) **Geschirrspülmaschine mit zumindest einer Sprüheinrichtung**
Dishwasher with at least one spray device
Lave-vaisselle doté d'au moins un dispositif de vaporisation

(30) Priorität: 18.10.2010 DE 102010042578
(43) Veröffentlichungstag der Anmeldung: 18.04.2012
(73) Patentinhaber: BSH Hausgeräte GmbH, 81739 München (DE)
(72) Erfinder: Budzynski, Andreas, 86157 Augsburg (DE); Büsing, Johannes, 86494 Emersacker (DE)

(56) Entgegenhaltungen:
- EP-A1- 0 631 755
- EP-A1- 1 167 856
- EP-A1- 2 147 997
- WO-A1-2009/004034
- WO-A1-2010/038189
- DE-A1- 2 355 271
- DE-U1- 9 014 721
- US-A- 4 014 467
- US-A1- 2008 142 056
- US-A1- 2010 116 296

## Beschreibung

Die Erfindung betrifft eine Geschirrspülmaschine, insbesondere eine Haushaltsgeschirrspülmaschine, mit einem einen Aufnahmeraum für zumindest einen Spülkorb bildenden Spülbehälter, wobei in dem zumindest einen Spülkorb zu reinigendes Gut halterbar ist, das über zumindest eine dem jeweiligen Spülkorb zugeordnete Sprüheinrichtung beaufschlagbar ist und das hierzu verwendete Wasser und/oder die Spülflotte über zumindest eine Rohrleitung der Sprüheinrichtung zuführbar ist, nach dem Oberbegriff des Anspruchs 1.

Es sind zahlreiche Geschirrspülmaschinen bekannt, die einen Spülbehälter mit einem im wesentlichen quadratischen Grundriss aufweisen, etwa dann, wenn die Geschirrspülmaschine in Draufsicht sowohl in Breiten- wie auch in Tiefenrichtung eine Erstreckung von jeweils ca. 60 Zentimetern aufweist.

In letzter Zeit kommen häufig auch gegenüber den genannten Geschirrspülmaschinen verschmälerte Geräte auf den Markt, die beispielsweise die genannte Tiefe beibehalten, dabei jedoch eine Breite von typisch 45 oder 50 Zentimetern aufweisen. Solche Geräte tragen beispielsweise der steigenden Zahl von Singlehaushalten Rechnung oder werden manchmal im Campingbereich oder oftmals in sehr kleinen Küchen eingesetzt. Der Gesamtgrundriss der Geschirrspülmaschine wie auch der des eigentlichen Spülbehälters zur Aufnahme von zu reinigendem Gut ist dabei im wesentlichen rechteckig. Bei Geschirrspülmaschinen mit einem quadratischem Grundriss kann dabei dieser Grundriss von einem um eine vertikale Zentralachse rotierbaren Sprüharm in Breiten- und Tiefenrichtung gleichmäßig mit Wasser und/oder mit Reinigungsmittel versetztem, umlaufendem Wasser, sog. Spülflotte, beaufschlagt werden, so dass der Sprüharm bei seiner Drehbewegung gleichnah an den vorderen und hinteren Rand wie auch an die beiden Seitenränder des in der Sonderform des Quadrats vorliegenden Rechtecks heranreicht.

Weist das Rechteck jedoch unterschiedliche Kantenlängen auf, kann ein zentral gelagerter Sprüharm nur eine Länge aufweisen, die kleiner als die kürzeste Kantenlänge ist. Bei einem in der genannten Weise verschmälerten Gerät bedeutet dies, dass ein zentral gelagerter Sprüharm bei seiner Rotation zwar bis zu den Seitenwandungen hin eine Beaufschlagung durchführen kann, jedoch von einer vorderen Wandung oder Tür wie auch von einer hinteren Wandung deutlich entfernt bleibt, so dass dort unbeaufschlagte Bereiche verbleiben. Dies führt nicht nur zu einer dort verminderten Benetzung des zu reinigenden Gutes, sondern macht es auch problematisch, Reinigungsmittel, insbesondere in Festkörperform wie z.B. ein Mehrphasen-Tab, das an einer vorderen Kante eines Spülkorbs oder eine vorderen Wandung oder einer häufig verwendeten vorderen Tür gehalten ist, von einem Strahl des Sprüharms erfassen zu können, um dieses damit in die Spülflotte einzubringen.

Insbesondere bei Anordnungen mit außerhalb der Mitte liegenden Sprüheinrichtungen können Zuleitungen in diese Sprüheinrichtungen vergleichsweise lang werden, was ihre Herstellung erschwert.

Aus der US 2010/0116296 A1 ist eine Geschirrspülmaschine bekannt, welche eine Sprüheinrichtung mit einer mehrteiligen Rohrleitung umfasst.

Der Erfindung liegt das Problem zugrunde, auch für Geschirrspülmaschinen mit langen Zuleitungen zu den Sprüheinrichtungen diese Zuleitungen einfach und in der Großserienherstellung maßhaltig herstellen und montieren zu können.

Die Erfindung löst dieses Problem durch eine Geschirrspülmaschine mit den Merkmalen des Anspruchs 1. Weitere Vorteile und Merkmale sowie Weiterbildungen der Erfindung sind in den abhängigen Ansprüchen angegeben.

Mit der erfindungsgemäßen Geschirrspülmaschine kann eine oder mehrere Sprüheinrichtung(en) mit Wasser und/oder sog. Spülflotte beaufschlagende Rohrleitung über ihren axialen Verlauf in sich geteilt sein und dadurch aus mehreren, selbst vergleichsweise kurzen Stücken aufgebaut sein, so dass die Rohrleitung eine große Gesamtlänge erreichen kann und dennoch die Einzelteile leicht herstellbar und handhabbar sind.

Insbesondere ist es damit auch einfach möglich, dass die Rohrleitung nicht nur eine Sprüheinrichtung, etwa einen rotierenden Sprüharm, versorgt, sondern mit zwei Auslässen zur Versorgung von zwei Sprüheinrichtungen versehen ist. Hierfür liegt die zumindest nahezu geradlinig verlaufende Rohrleitung im wesentlichen horizontal unterhalb eines Geschirrkorbs und bildet ein Einlaufrohr für zwei zum Beispiel hintereinander liegende Sprüheinrichtungen.

Um eine stets gleiche Gesamtlänge der mehrteiligen Rohrleitung gewährleisten zu können, sind die aufeinander folgenden Teile zweckmäßigerweise gegen axiale Relativbewegung aneinander lagegesichert. Dadurch ist eine Maßhaltigkeit der Gesamtlänge wie auch im Betrieb eine Spielfreiheit der Teile gegeneinander bezüglich axialer Beweglichkeit erreicht.

Sofern an einem der Teile hierfür zweckmäßigerweise ein fester Anschlag vorgesehen ist und an dem anderen Teil insbesondere ein in Verbindungsstellung direkt oder indirekt gegen den Anschlag federnder, integral angeformter Abschnitt, sind weitere Einzelteile, wie etwa O-Ringe, zur axialen Sicherung entbehrlich, wodurch die Anzahl der benötigten Bauteile verringert und somit eine preiswerte Herstellung möglich ist. Dennoch können durch das integral angeformte federnde Element Fehlertoleranzen der Teile in erheblichem Maße ausgeglichen werden, so dass dennoch eine gleiche Gesamtlänge der Rohrleitung erreicht wird.

Für eine konstruktiv einfache Ausbildung umfasst der federnde Abschnitt insbesondere einen dem Verbindungsbereich zugewandten Steg, der über einen Teilbereich des Umfangs ausgebildet und dort von einer Ausnehmung hintergriffen ist, die ein Einfedern in axialer Richtung erlaubt. Der Steg kann vorzugsweise einstückig mit dem jeweiligen Teil, dem er zugeordnet ist, ausgebildet sein.

Gleichzeitig kann eine axiale Verlagerung der Teile in auseinanderziehender Richtung gegeneinander zweckmäßigerweise durch ein formschlüssig in ein gegenüberliegendes Teil eingreifendes Rastelement verhindert sein. Dieses greift zum Beispiel von einem in Verbindungsstellung inneren Teil radial nach außen und hakenartig in eine Ausnehmung einer außen umgreifenden Muffe des gegenüberliegenden Teils ein.

Auch bei der genannten Einstückigkeit des jeweiligen axialen Teils kann die Verbindung der Teile insbesondere über eine rein axiale, eine formschlüssige Verbindung herstellende Druckbewegung bewirkbar sein. Ein Zwischenlegen von Dichtungs- oder Federringen kann dabei ebenso entbehrlich sein wie ein Verdrehen oder bajonettartiges Sichern der Teile aneinander. Die Montage ist dadurch denkbar einfach und schnell.

Erfindungsgemäß ist vorgesehen, dass die aufeinander folgenden Teile gegen eine Relativbewegung in Form einer Verdrehung in Umfangsrichtung aneinander lagegesichert sind. Dann können beispielsweise mehrere Auslässe aus der Rohrleitung exakt fluchtend zueinander stehen, so dass beispielsweise Achsen von daran gehaltenen rotierbaren Sprüharmen auch exakt parallel zueinander stehen. Ein derart ausgebildetes Einlaufrohr kann sehr nah an einem Spülkorb, insbesondere unterhalb dessen Lageebene, montiert sein und auch darunter eine große Höhe belassen, da die Sprüharme dann sehr genau in einer horizontalen Ebene drehen und eine die Höhe einschränkende Schräglage in jeder Phase der Bewegung verhindert ist. Auch diesbezüglich ist jederzeit im Betrieb eine Spielfreiheit dieser Verbindung erreicht.

Dabei sind erfindungsgemäß die aufeinander folgenden Teile gegen eine azimutale Relativbewegung in Form einer Verdrehung aneinander lagegesichert, in dem an einem der Teile ein schmaler, mit einer radialen Komponente ausgreifender Steg vorgesehen ist und an dem anderen Teil ein in Verbindungsstellung den Steg aufnehmender Einlaufkanal. Der Steg und/oder der Einlaufkanal können konisch ausgebildet sein, um das Einführen zu erleichtern. An der größten Breite des Stegs weist die in Verbindungsstellung daran anliegende Breite des Einlaufkanals höchstens ein Übermaß im Zehntelmillimeterbereich auf.

Um die exakte Parallelität der Teile des Einlaufrohrs - und somit auch die Parallelität von Drehachsen zweier rotierender Sprüharme, die aus dem Einlaufrohr gespeist werden, sicherzustellen, sind besonders günstig die aufeinander folgenden Teile gegen ein Verkanten gegeneinander (Abwinklung der Achsen der Teile) spielfrei aneinander lagegesichert.

Günstig sind hierfür zwischen einer Muffe des einen Teils und einem Einsteckende des anderen Teils zumindest zwei axial voneinander beabstandete und in den Zwischenraum zwischen Muffe und Einsteckende ragende Kontaktbereiche zur radialen Fixierung von Muffe und Einsteckteil gegeneinander vorgesehen. Bei Anlage dieser Kontaktbereiche ist automatisch über die axiale Länge der Überlappung von Muffe und Einsteckteil deren Parallelität zueinander sichergestellt. Da die einzelnen axialen Teile selbst aufgrund der Teilung ja gerade kurz sein können, ist auch die Gefahr, dass diese sich in sich durchbiegen, minimiert.

Für eine hohe Verkippsicherheit ist der axiale Abstand der beiden Kontaktbereiche insbesondere möglichst groß und beträgt vorteilhaft zumindest 27 Milimeter.

Weiter ist es besonders zweckmäßig, wenn die aufeinander folgenden Teile gegeneinander abgedichtet sind. Dann sind nicht nur separate Federelemente, sondern auch separate Dichtelemente entbehrlich.

Hierfür ist insbesondere das zur Kopplung der beiden Teile des Einlaufsrohrs vorgesehene Rohrende des einen Teils (erstes Teilstück) des Einlaufrohrs als Muffe ausgebildet, während das zur Kopplung der beiden Teile des Einlaufsrohrs vorgesehene Rohrende des anderen Teils (zweites Teilstück) des Einlaufsrohrs als Einsteckende ausgebildet ist. Das Einsteckende des zweiten Teils, das in die Muffe des ersten Teils eingesteckt wird, ist mit einer radial wulstartig ausgreifenden Verbreiterung, insbesondere in Form eines Teil- oder Vollrings, versehen. Diese Formgebung kann im Spritzgussverfahren leicht integral eingebracht werden, wobei für die Aufweitung dann beispielsweise eine Zwangsentformung eines Formkerns vorgenommen werden kann.

Insbesondere sind daher die axial aufeinander folgenden Teile frei von jeglichen zusätzlichen Dicht-, Feder- oder Haltemitteln miteinander verbunden. Die aufeinander folgenden Teile können dann allein durch Ausbildung der miteinander verbundenen Teile der Rohrleitung gegeneinander sowohl axial gesichert als auch verdrehgesichert als auch gegen ein Verkanten gesichert und abgedichtet sein.

Eine Spritzgussherstellung ist einfach möglich, wenn die Teile der Rohrleitung aus einem Kunststoff, insbesondere Polypropylen, ggf. mit Mineralverstärkung, jeweils einstückig gebildet sind.

Sehr günstig ist mit einem solchen Einlaufrohr eine erste Sprüheinrichtung zur Vorderseite hin versetzt, so dass Spülgut bis hin zum vorderen Randbereich des Spülkorbs gereinigt werden kann. Durch eine weitere Sprüheinrichtung mit Austrittsöffnungen für Wasser und/oder Spülflotte, die gegenüber der ersten Sprüheinrichtung nach hinten versetzt ist, kann auch im hinteren Bereich eine Verbesserung der Reinigungsbeaufschlagung stattfinden. Gleichzeitig ist eine im Einlaufrohr verbleibende Restwassermenge - somit auch Laugenverschleppung - weitgehend vermieden, d.h. ist sehr niedrig oder nicht vorhanden, wenn das genannte Einlaufrohr zur gemeinsamen Versorgung eine tiefste Stelle oberhalb eines Einlaufs in die vordere oder in die hintere Sprüheinrichtung aufweist. Dadurch ist nur eine einzige Versorgungsleitung zu beiden Sprüheinrichtungen nötig, diese müssen nicht jeweils über eigene Rohrleitungen versorgt werden. Wird der Zulauf bzw. die Förderung an Wasser oder Spülflotte zu diesem Einlaufrohr gestoppt, z.B. indem eine im Flüssigkeits- Umwälzkreislauf der Geschirrspülmaschine vorhandene Wasserweiche oder ein Ventil die Flüssigkeitszufuhr zum Einlaufrohr absperrt, dann kann die im Einlaufrohr verbliebene Flüssigkeit über dessen tiefste Stelle, die über dem Einlauf in die vordere Sprüheinrichtung oder über dem Einlauf in die hintere Sprüheinrichtung zugeordnet positioniert ist, selbsttätig aufgrund einer nach unten wirksam werdenden Schwerkraft nach unten aus derjenigen Sprüheinrichtung herauslaufen, deren Einlauf unterhalb der tiefsten Stelle des Einlaufsrohrs liegt. Durch diese Lage der tiefsten Stelle des Einlaufsrohrs kann die Leitung zumindest nahezu vollständig entwässern, wobei das Wasser und/oder Spülflotte direkt in die darunter befindliche Sprüheinrichtung laufen kann.

Wenn insbesondere die tiefste Stelle oberhalb des Einlaufs in die hintere Sprüheinrichtung gelegen ist, kann das Gefälle in zwei gegenläufige Abschnitte geteilt sein, so dass die tiefste Stelle nur wenig Höhenaufbau benötigt und der Raum unterhalb des Einlaufrohrs und der Sprüheinrichtungen nahezu unbeeinträchtigt bleibt. Dies ist vor allem günstig, wenn unter der genannten Einrichtung ein weiterer Spülkorb vorgesehen ist, dessen Befüllhöhe möglichst erhalten bleiben soll.

Sofern die tiefste Stelle eine Abknickung im Verlauf des Einlaufrohrs ausbildet, können bei der Herstellung im Spritzgussverfahren dort auch leicht zwei - für sich jeweils nur kurze - Formkerne aneinanderstoßen, die dann einfach in gegenläufige Richtungen entformt werden können.

Besonders günstig ist das Einlaufrohr an einen Spülkorb angehängt und mit diesem beweglich. Damit kann das Einlaufrohr etwa einer Höhenverlagerbarkeit des Spülkorbs zwangsweise folgen, ohne hierfür eigenen Bewegungsaufwand zu erfordern. So kann der Raum beispielsweise für Spülgut in einem oberen Korb maximiert werden, indem dieser Spülkorb in seine tiefste Stellung verlagert wird. Wird der Spülkorb hingegen in seiner höchsten Stellung gehalten, ist der Raum für Spülgut in einem darunter liegenden Spülkorb maximiert. Durch die Mitnahme des Einlaufrohrs in Höhenrichtung bleibt der Abstand zum Spülkorb - und somit auch die Effektivität der Beaufschlagung - stets gleich.

Ein gemeinsames Anschlußstück für die Versorgung des Einlaufrohrs mit den Sprüheinrichtungen aus einer zum Einlaufrohr führenden und der Rückwand des Spülbehälters zugeordneten Zuführleitung kann dabei zwangsweise höhenverlagerbar an der Zuführleitung gehalten sein, um die Höhenverlagerung zu ermöglichen. Auch ein Auszug nach vorne in eine Be- und Entladestellung ist mit dem Anschlußstück möglich.

Für eine schmale Einbaulage weist der Spülbehälter eine rechteckige Grundfläche mit einer gegenüber seiner Quererstreckung vergrößerten Längserstreckung in Tiefenrichtung aus, wobei zumindest der vordere Sprüharm wie bei einer quadratischen Grundfläche in seiner Rotationsbewegung die Quererstreckung nahezu vollständig überstreichen kann.

Eine solche Einrichtung mit Zusatzsprühsystem kann für die Beaufschlagung eines Auffangkorbes für Reinigungsmittel besonders günstig einem oberen von zumindest zwei Spülkörben zugeordnet sein, ist aber auch zusätzlich oder alternativ für einen unteren Korb verwendbar.

Besonders günstig ist durch die exzentrische Anordnung des Sprüharms und seinen Versatz entlang der Quermitte des Spülbehälters ein am vorderen Ende des Spülkorbs oder in der Tür angeordneter Aufnahmebehälter für insbesondere für in Festkörperform vorliegendes Reinigungsmittel von einem aus dem Sprüharm austretenden Strahl direkt und effektiv beaufschlagbar, da durch diese Anordnung die Beaufschlagung in der Mitte am weitesten bis zur Vorderseite reicht.

Die vorstehend erläuterten und/oder die sonstigen, in den Unteransprüchen wiedergegebenen vorteilhaften Aus- und/oder Weiterbildungen der Erfindung können dabei - außer z.B. in den Fällen eindeutiger Abhängigkeiten oder unvereinbarer Alternativen - einzeln oder aber auch in beliebiger Kombination miteinander zur Anwendung kommen.

Weitere Vorteile und Merkmale der Erfindung und/oder deren vorteilhaften Aus- und Weiterbildungen ergeben sich aus in der Zeichnung dargestellten und nachfolgend beschriebenen Ausführungsbeispielen des Gegenstandes der Erfindung.

In der Zeichnung zeigen jeweils schematisch:
- Fig. 1: eine Geschirrspülmaschine in schematischer Seitenansicht mit der besseren Übersicht halber durchsichtig dargestellter Seitenwandung und nur einem oben eingezeichneten Spülkorb, wobei dem oberen Spülkorb zwei Sprüheinrichtungen zugeordnet sind, von denen die zur Vorderseite hin gelegene in ihrer vollen Länge dargestellt ist,
- Fig. 2: den Spülbehälter aus Figur 1 in perspektivischer Ansicht von schräg seitlich und vorne, wobei wiederum nur ein oberer Spülkorb eingezeichnet ist, hier jedoch sowohl ein vorderer als auch ein hinterer Sprüharm dargestellt sind,
- Fig. 3: ein beispielhaftes Einlaufrohr mit zwei davon versorgbaren Sprüharmen hintereinander in herausgezeichneter Einzelteildarstellung und mit einem rückseitigen Anschlußende zur Verbindung mit einem vertikalen Zuführrohr,
- Fig. 4: das Einlaufrohr nach Figur 3 in seitlicher Ansicht ohne die anmontierten Sprüharme,
- Fig. 5: eine schematische Draufsicht auf einen in Betriebsstellung vorderen und einen in Betriebsstellung hinteren Teil des Einlaufrohrs vor ihrer Montage aneinander,

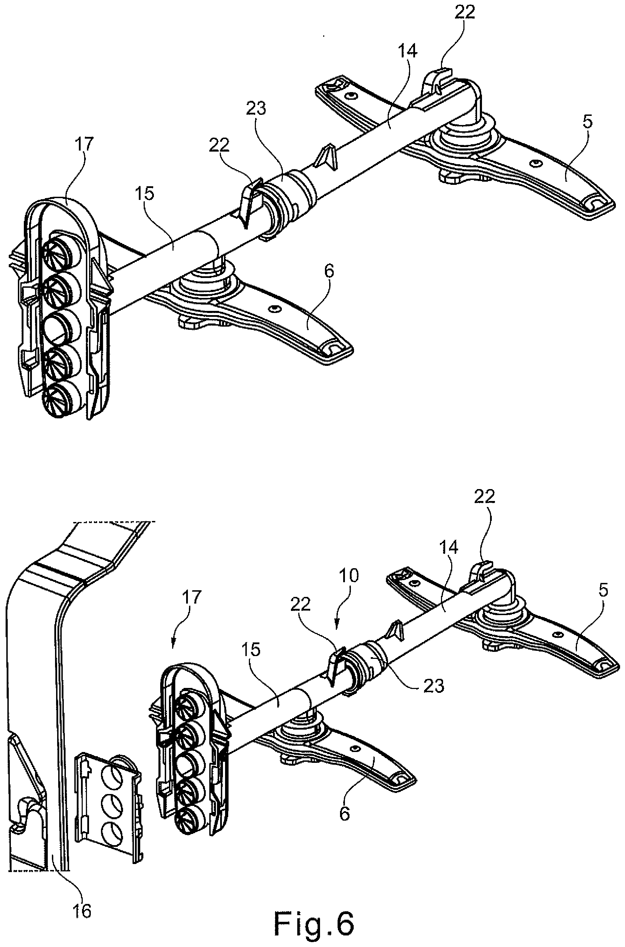

- Fig. 6: das Einlaufrohr nach Figur 3 in perspektivischer Ansicht von schräg hinten, im oberen Bild mit zusammengesetztem Anschlußstück, im unteren Bild mit auseinandergezogenem Anschlußstück,
- Fig. 7: einen Detailausschnitt des Verbindungsbereichs zwischen den Teilen im Bereich der Verbindungsmuffe am ersten Teilstück des Einlaufrohrs,

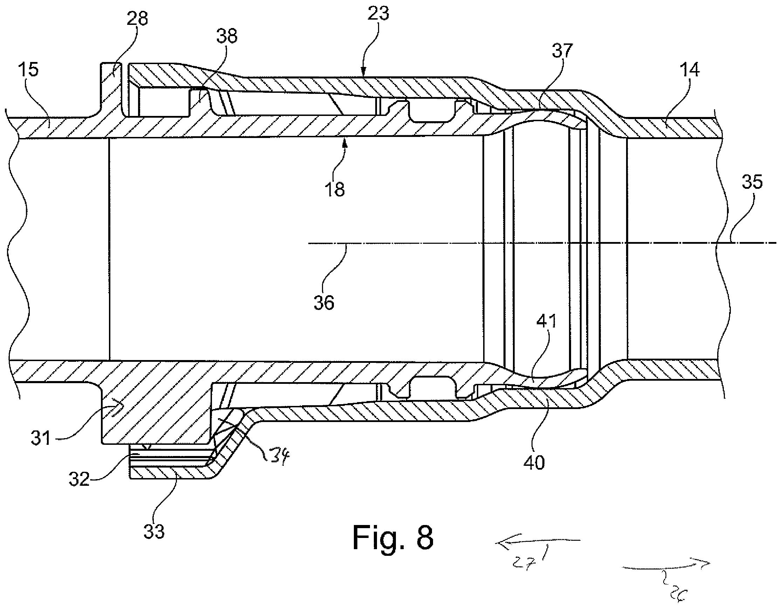

- Fig. 8: eine längsschnittliche Ansicht des Verbindungsbereichs,

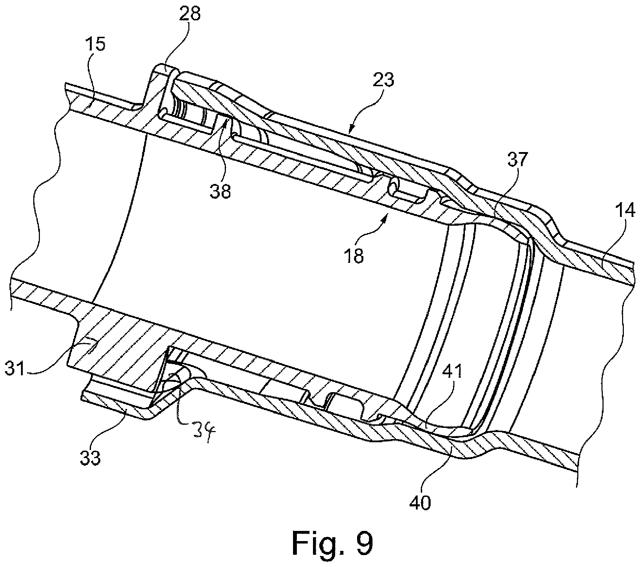

- Fig. 9: eine ähnliche Ansicht wie Figur 8 aus einer leicht veränderten Perspektive,
- Fig. 10: eine perspektivische und teilweise angeschnittene Ansicht des Verbindungsbereichs der axial aufeinander folgenden Teile,
- Fig. 11: einen Schnitt durch die Verbindungsmuffe des Rohrendes des ersten Teilstücks und des in die Muffe eingesteckten Rohrendes des zweiten Teilstücks des Einlaufrohrs etwa entlang der Ebene XI in Figur 10,
- Fig. 12: einen Schnitt durch die Muffe und das eingesteckte Rohrende etwa entlang der Ebene XII in Figur 10.

Elemente mit der gleichen Funktion und Wirkungsweise sind in den Figuren jeweils mit den gleichen Bezugszeichen versehen.

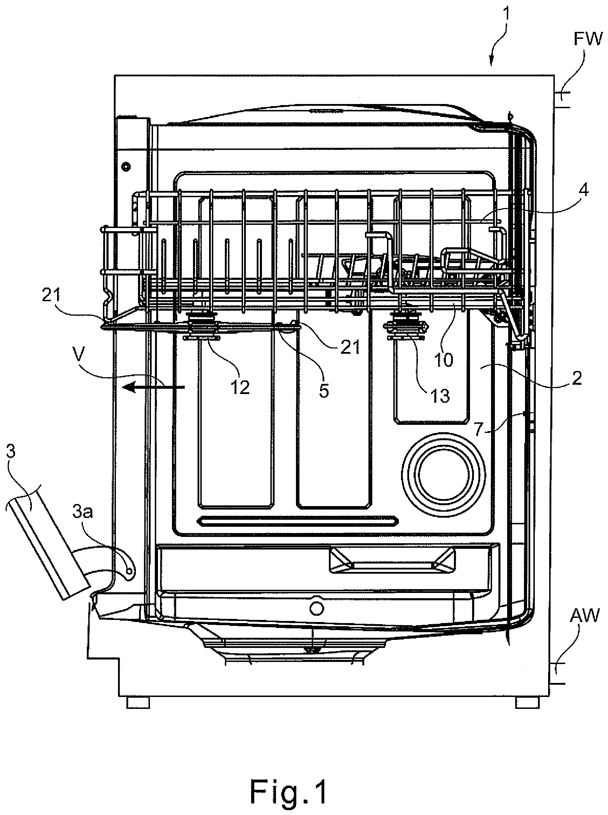

Die in Figur 1 dargestellte Geschirrspülmaschine 1 ist eine Haushaltsgeschirrspülmaschine und weist einen Spülbehälter 2 zur Aufnahme von zu bearbeitendem Spülgut wie Geschirr, Töpfen, Bestecken, Gläsern, Kochutensilien u. ä. auf. Der Spülbehälter 2 kann einen zumindest im wesentlichen rechteckigen Grundriss mit einer in Betriebsstellung einem Benutzer zugewandten Vorderseite V aufweisen. Das Rechteck kann dabei sowohl gleiche Kantenlängen als auch insbesondere unterschiedliche Kantenlängen in x- und y-Richtung aufweisen, insbesondere derart, dass der Spülbehälter 2 gegenüber seiner Tiefenerstreckung y in der Breite x verschmälert ist.

Der Behälter 2 ist insbesondere an seiner Vorderseite V von einer Tür 3 - auch ein oberseitiger Deckel ist als Tür 3 möglich - verschließbar. Die Tür 3 ist in Figur 1 nur abgebrochen dargestellt und beispielsweise um eine untere Horizontalachse 3a aufschwenkbar. Das Spülgut ist in zumindest einem Spülkorb 4 halterbar; hier sind im Spülbehälter 2 genau zwei Geschirrkörbe 4 übereinander vorgesehen, von denen der besseren Übersicht halber jedoch in der Zeichnung nur der obere dargestellt ist. Die Anzahl an Spülkörben 4 kann je nach Ausmaß und Art der Geschirrspülmaschine 1 variieren. Auch eine sog. Besteckschublade kann zusätzlich vorgesehen sein. Diese Geschirrkörbe 4 sind über Sprüheinrichtungen 5, 6 mit Frischwasser FW und/oder mit umlaufendem Wasser, das mit Reinigungsmittel, Klarspülmittel, Zusatzstoffen wie z.B. Enthärtungsmittel, Salze, und/oder Schmutzteilchen, usw.... versetzt ist, sog. Spülflotte S, mit jeweils einer aufwärts gerichteten Komponente beaufschlagbar.

Des weiteren können die Spülkörbe 4 beispielsweise auf Rollen über seitliche Schienen im Spülbehälter 2 nach vorne verlagerbar sein, um so eine Zugriffstellung für den Benutzer zu erreichen, in der dieser die Spülkörbe 4 bequem be- und entladen kann. In vertikaler Schließstellung der Tür 3 steht der oder jeder Geschirrkorb 4 im Nahbereich einer der geschlossenen Tür 3 gegenüber stehenden Rückwand 7 des Spülbehälters 2. In der zur Vorderseite V verlagerten Zugriffstellung des zumindest einen Geschirrkorbs 4 ist die gezeichnete Tür 3 nach unten vorne um eine horizontale Querachse 3a aufgeschwenkt und liegt im wesentlichen horizontal.

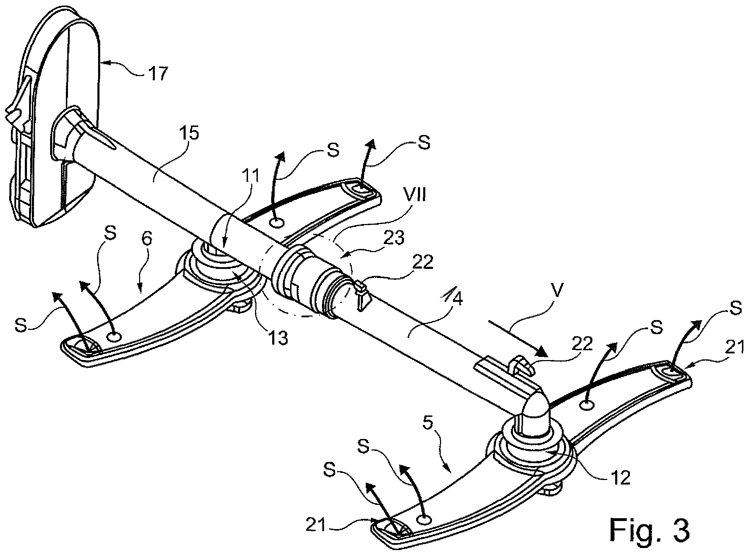

Gemäß dem gezeichneten Ausführungsbeispiel sind dem hier nur gezeichneten oberen Spülkorb 4 zwei oder mehr Sprüheinrichtungen 5, 6 in zumindest nahezu derselben Horizontalebene unterhalb des Spülkorbs 4 zugeordnet. Die erste Sprüheinrichtung 5 umfaßt dabei einen um eine vertikale Drehachse 8 rotierbaren Sprüharm, dessen Drehachse 8 gegenüber einer zentrischen Anordnung zur Vorderseite V hin versetzt ist. Dabei befindet sich diese Sprüheinrichtung 5 jedoch immer noch in der Quermittelebene. Zudem ist zumindest eine weitere Sprüheinrichtung 6 vorgesehen, die gegenüber der ersten Sprüheinrichtung 5 von der Vorderseite V weg nach hinten in Richtung zur Rückwand 7 versetzt ist. Gemäß der in Figur 3 angedeuteten Ausbildung umfasst die hintere Sprüheinrichtung 6 einen weiteren, um eine weitere vertikale Achse 9 - parallel zur ersten - rotierbaren Sprüharm, was nicht zwingend ist. Auch zum Beispiel zwei seitliche Düsen, die von einem T-förmigen Abzweig seitlich ausgreifen und nach oben sprühen können, sind möglich.

Sowohl die vordere 5 als auch die hintere Sprüheinrichtung 6 sind von einer gemeinsamen Rohrleitung mit Frischwasser FW und/oder Spülflotte S versorgbar. Hier sind als Rohrleitungen einerseits ein im wesentlichen horizontal unterhalb des oberen Spülkorbs 4 angeordnetes Einlaufrohr 10 und ein zu diesem führenden, im wesentlichen aufragendes Zuführrohr 16 vorgesehen.

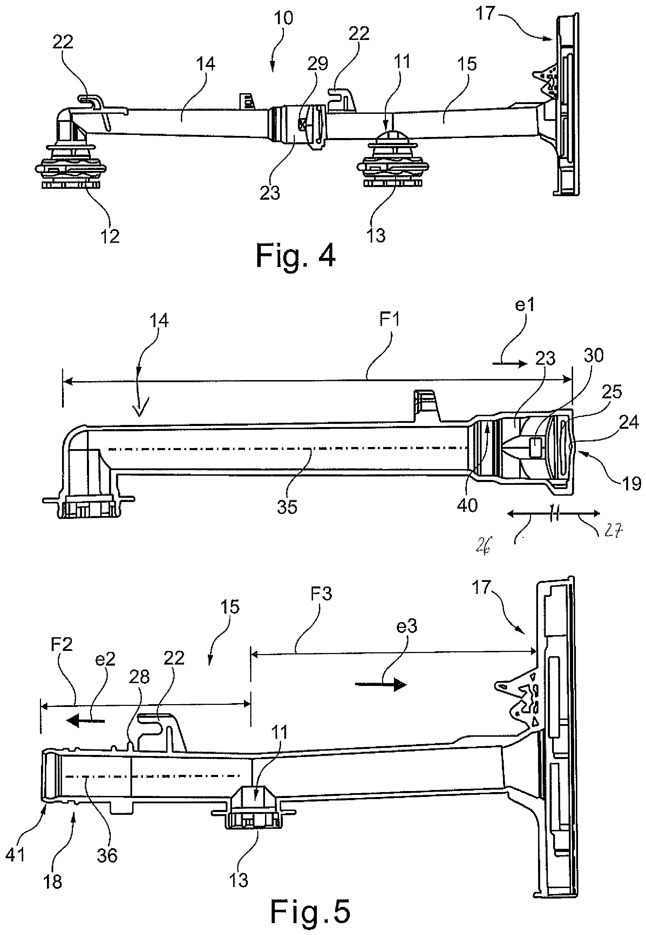

Zumindest eine dieser Rohrleitungen 10, 16, hier das im wesentlichen horizontal verlaufende Einlaufrohr 10, ist über ihren axialen Verlauf geteilt und aus mehreren Teilen 14, 15, insbesondere Rohrabschnitten, zusammengesetzt, wie beispielsweise in den Figuren 4 und 5 im Überblick gut zu erkennen ist. Die so in ihrem geradlinigen Verlauf geteilte Rohrleitung 10 kann dabei mit zwei oder mehr Auslässen 12, 13 zur Versorgung von zwei Sprüheinrichtungen 5, 6 versehen sein.

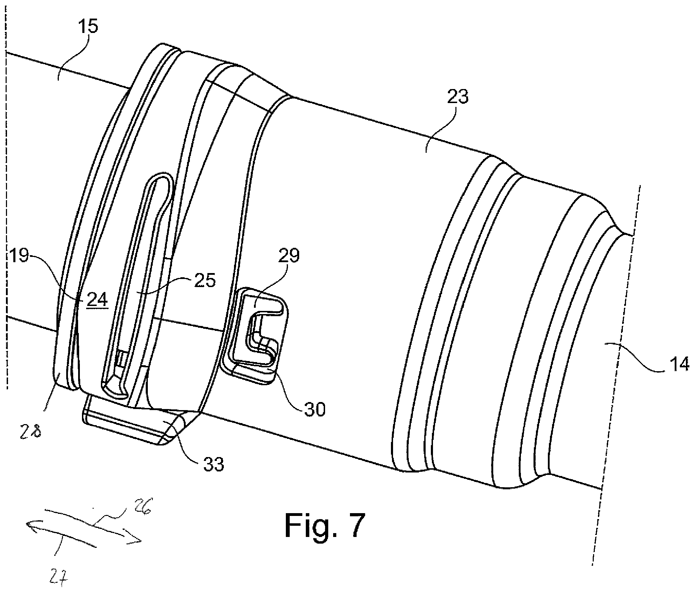

Wie im Detail etwa in Figur 7 dargestellt ist, sind die aufeinander folgenden Teile 14, 15 des Einlaufrohrs 10 gegen axiale Relativbewegung aneinander spielfrei lagegesichert:
Hierfür ist an dem in montierter Stellung im Nahbereich der Vorderseite V stehenden Teil 14, der eine Muffe 23 umfasst, an dieser ein federnder Abschnitt 24 ausgebildet. Dieser bildet zumindest einen dem Verbindungsbereich zugewandten Steg aus und ist über einen Teilbereich des Umfangs ausgebildet. Hier sind über den Umfang zwei solcher Stege 24 gebildet, die jeweils von einer Ausnehmung 25 hintergriffen sind. Dadurch ist ein Einfedern der Stege axial in Richtung des Pfeils 26 ermöglicht. Die materialimmanente Elastizität bewirkt dabei ein entgegengesetztes Ausfedern in Richtung des Pfeils 27. Dadurch gelangt der Steg 24 jederzeit in eine Anlagestellung an eine hier ganz oder teilweise umlaufende Anschlagkante 28 des gegenüberliegenden Teils 15. Hier ist eine direkte Anlage des Stegs 24 an den Anschlag 28 gezeigt. Auch eine indirekte Anlage wäre möglich. Der Steg 24 umfasst hier eine ausgreifende Spitze 19, mit der er früh zu einer Anlage an den Anschlag 28 gelangt. Der Federweg ist daher groß, die Überdeckung des federnden Elements 24 und des Anschlags 28 gewährleistet bei allen denkbaren Toleranzen eine spielfreie Verbindung.

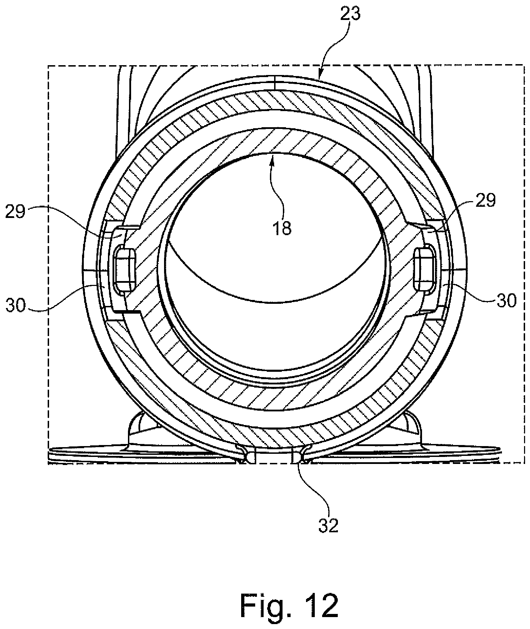

Gegen ein zu weites Ausfedern des Stegs 24 in Richtung des Pfeils 27 - und somit gegen eine axiale Verlagerung der Teile 14, 15 gegeneinander in auseinander-ziehender Richtung - wirkt zumindest ein formschlüssig in ein gegenüberliegendes Teil 14 eingreifendes Rastelement 29 - hier sind über den Umfang zwei solcher Rastelemente vorgesehen (Figur 12). Diese sind vorzugsweise einstückig am einsteckbaren Ende 18 des Teils 15 angeformt und greifen jeweils mit einer radialen Komponente nach außen und in eine komplementäre Ausnehmung 30 der Muffe 23 ein. Einerseits durch diese Auszugsicherung 29, 30 und andererseits durch die in Auszugrichtung 27 wirkende Federkraft des Stegs 24 gegen den Anschlag 28 sind die Teile 14, 15 fest und dauerhaft spielfrei gegeneinander axial verspannt. Irgendwelche externen Federelemente, wie O-Ring oder ähnliches, sind dabei entbehrlich. Auch ein gewindeartiges oder bajonettartiges Verdrehen der Teile 14, 15 gegeneinander, um ein formschlüssiges Hintergreifen als Auszugsicherung einzustellen, ist dabei entbehrlich. Vielmehr kann die verbindende Montage der Teile 14, 15 manuell oder von einer Maschine einfach und schnell über eine rein axiale Druckbewegung erfolgen. Dabei werden die Rastelemente 29 von der Muffe 23 zunächst radial einwärts gepresst, ehe sie dann in die Ausnehmungen 30 ausfedern können.

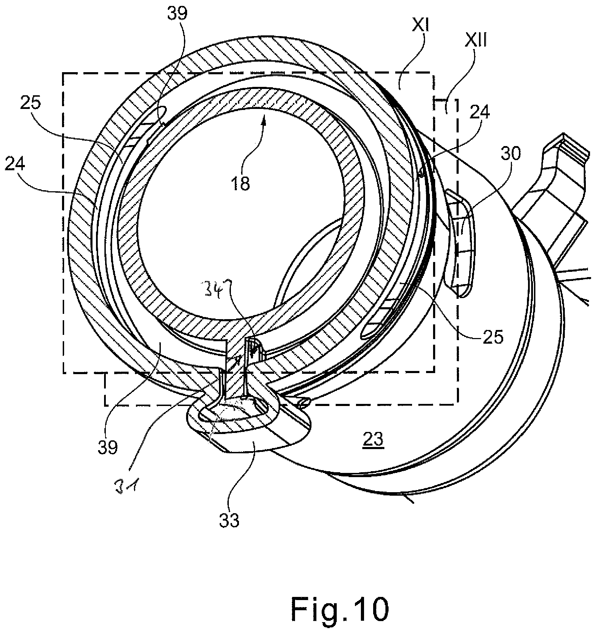

Neben der beschriebenen axialen Lagesicherung sind die aufeinander folgenden Teile 14, 15 auch gegen Relativbewegung (Verdrehung) in Umfangsrichtung aneinander lagegesichert:
Hierfür ist an dem einsteckbaren Ende des Teils 15 ein schmaler, mit einer radialen Komponente ausgreifender Steg 31 vorgesehen. Am anderen, die Muffe 23 umfassenden Teil 14 ist ein in Verbindungsstellung den Steg 31 aufnehmender Einlaufkanal 32 ausgebildet, möglichst ebenfalls einstückig angeformt, wie in Figur 10 angedeutet ist. Dort ist der Einlaufkanal 32 als Bestandteil einer taschenartigen Kontur 33 ausgebildet.

Die Breite des Einlaufkanals 32 gemessen quer zu dessen axialen Erstreckung weist gegenüber der größten Breite des Stegs 31 gemessen quer zu dessen axialen Erstreckung, dort an einer Querverdickung 34 gebildet, ein nur sehr geringes Übermaß im Zehntelmillimeterbereich auf, so dass der Steg 31 in Verbindungsstellung an seiner Verdickung 34 gegen eine Verdrehbewegung entlang dem Umfang fest und spielfrei im Einlaufkanal 32 gehalten sein kann.

Gleichzeitig kann die Breite des Einlaufkanals 32 und/oder des Stegs 31 über seine axiale Erstreckung zur Bildung einer Einlaufhilfe beim Zusammenstecken der Teile 14, 15 variieren. Gemäß der Zeichnung hat der Einlaufkanal 32 eine konstante Breite, wohingegen die Breite des Stegs 31 von einer schmalen Spitze zur Verdickung 34 hin zunimmt, so dass diese dann in einem Preßsitz in dem Einlaufkanal 32 gehalten ist, ohne dass dadurch ein weiterer Freiheitsgrad beeinflusst würde.

Weiterhin sind hier die aufeinander folgenden Teile 14, 15 auch gegen ein Verkanten gegeneinander (Abwinklung der Längsachsen 35, 36 der Teile 14, 15) spielfrei lagegesichert:
Hierfür sind zwischen einer Muffe 23 des einen Teils 14 und dem Einsteckende 18 des anderen Teils 15 zumindest zwei axial voneinander beabstandete und in den Zwischenraum zwischen Muffe 23 und Einsteckende 18 ragende Kontaktbereiche 37, 38 zur radialen Fixierung von Muffe 23 und Einsteckteil 18 gegeneinander vorgesehen. Dieses wird auch als koaxiale Sicherung bezeichnet.

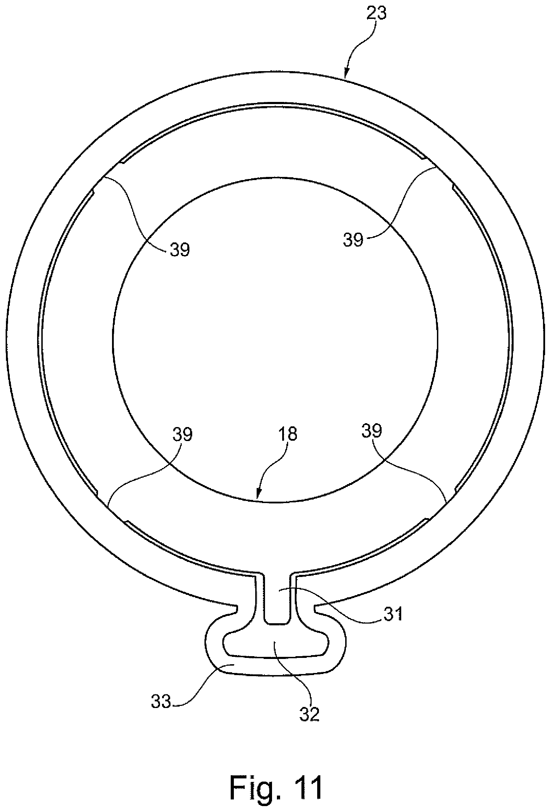

Der Kontaktbereich 37 ist ringförmig gebildet und stellt in Doppelfunktion einen unten noch näher beschriebenen Dichtungsbereich der Teile 14, 15 gegeneinander dar. Der zweite Kontaktbereich 38 umfasst hingegen, um dazwischen einen Luftdurchtritt zu ermöglichen, nur einzelne vom Einsteckende 18 nach radial außen ausgreifende Anformungen 39 (Figur 10, Figur 11), die an der umgreifenden Muffe 23 im Preßsitz anliegen und für diese Auflagepunkte bilden.

Für einen guten Schutz gegen das Verkanten beträgt der axiale Abstand der beiden Kontaktbereiche 37, 38 zumindest 27 Milimeter, insbesondere erstreckt er sich im wesentlichen über die Länge des Verbindungsbereichs aus Muffe 23 und Einsteckende 18.

Bei dem hier gezeichneten Einlaufrohr 10 sind die aufeinander folgenden Teile 14, 15 zusätzlich gegeneinander abgedichtet:
Der vordere Bereich des Einsteckendes bzw. der Einsteckhülse 18 des zweiten Rohrstücks 15 ist hierfür im ersten Kontaktbereich 37 mit einer radial wulstartig ausgreifenden Verbreiterung 41 in Form eines Teil- oder - wie hier - Vollrings versehen. Diese Aufweitung des Einsteckendes 18 kann aufgrund der Flexibilität des Materials durch eine Zwangsentformung bei der Herstellung erreicht werden. Sie ist insbesondere fassförmig ausgebildet. Diese wulstartige Verbreiterung 41 des Einsteckendes 18 ist in Verbindungsstellung der Teile 14, 15 von der außen aufsitzende Muffe 23 des ersten, hier der Beschickungsöffnung des Spülbehälters zugewandten, axial vorderen Rohrstücks 14, insbesondere form-, reib-, und/oder kraftschlüssig, gefasst. Dazu ist die Muffe 23 vorzugsweise komplementär zur radial innen liegenden, wulstartig, insbesondere fassförmig ausgreifenden Randverdickung 41 des Einsteckteils 18 ausgebildet, d.h. die Muffe weist im Ortsbereich der wulstartigen Aufweitung 41 des Einsteckendes 15 eine entsprechende, insbesondere komplementäre Randeinschnürung bzw. Verjüngung 40 auf. Somit ist durch den Passsitz zwischen der wulstartigen Aufweitung 41 und der Randeinschnürung 40 eine radiale Dichtung bewirkt, die flüssigkeits- und gasdicht ist. Diese kommt ohne zusätzliche Bauteile, wie etwa Dichtringe, aus. Dadurch wird auch radial wenig Bauraum benötigt. Die hohe Federkapazität der Fassform der Dichtung ermöglicht die Dichtheit und Montierbarkeit über alle Toleranzsituationen.

Somit können die aufeinanderfolgenden Teile 14, 15 frei von jeglichen zusätzlichen Dichtmitteln, Feder- oder Haltemitteln miteinander verbunden sein. Die Anzahl der benötigten Teile ist daher minimiert. Die Montage ist beschleunigt und besteht nur aus einem axialen Zusammenstecken. Ein Verschrauben ist nicht nötig.

Die Teile 14, 15 sind daher nur durch ihre Ausbildung gegeneinander sowohl axial gesichert als auch verdrehgesichert als auch gegen ein Verkanten, d.h. insbesondere auch in Radialrichtung, gesichert und abgedichtet. Dennoch ist ein Verkleben ebenso entbehrlich wie Schweißverbindungen, zusätzlich angespritzte Dichtlippen oder ähnliches. Die Teile 14, 15 bleiben trotz ihrer dichten und spielfreien Verbindung zerstörungsfrei voneinander demontierbar.

Durch die spielfreien Fixierungen in axialer, koaxialer und radialer Richtung sind Toleranzen der Kunststoffteile 14, 15 im Bereich der Verbindungsstelle zwischen der endseitigen Aufweitung 41 des rohrförmigen Einsteckendes 18 des zweiten, hier axial hinteren Rohrabschnitts 15 des zweigeteilten Einlaufrohrs 10 und der außen aufsitzenden Muffe 23 des ersten, hier axial vorderen Rohrabschnitts 14 und ihr Einbauzustand ohne Einfluss auf die Position der Sprüharme 5, 6. Damit ist ein geringer Abstand der Sprüharme 5, 6 zum Spülkorb und zueinander möglich. Es verbleibt dadurch eine große Innenraumhöhe im Spülbehälter 2.

Die geschlossene Kontur von Innen- und Außenrohr 15, 14 (keine Gabeln vorhanden) verhindern ein Verhaken der Bauteile bei automatischen Zuführeinheiten und während des Transports. Zudem versteift die geschlossene Kontur die Endbereiche 23, 18 der Teile 14, 15.

Für eine hinreichende Materialelastizität und ein geringes Gewicht sowie eine einfache Spritzgußherstellung können die Teile 14, 15 der Rohrleitung aus einem Kunststoff, insbesondere Polypropylen, ggf. mit Mineralverstärkung, jeweils einstückig gebildet sein, wie dies optimalerweise vorgesehen und hier gezeichnet ist. Die Durchbiegung der nur kurzen Teile 14, 15 ist zu vernachlässigen; zudem sind diese durch die radiale Fixierung aneinander fixiert, so dass zum Beispiel nur zwei Haken 22 ausreichen, um ein so gebildetes Einlaufrohr 10 an einen Spülkorb 4 anzuhängen. Damit ist die Montagekraft gering, da das Rohr 10 bei der Montage nur oval verformt wird. Zudem werden Montagefehler durch die geringe Anzahl der Haken 22 reduziert.

Das Einlaufrohr 10, das hier die beiden Sprüheinrichtungen versorgt, kann eine tiefste Stelle 11 oberhalb eines Einlaufs 12, 13 in die vordere 5 oder in die hintere Sprüheinrichtung 6 aufweisen. Gemäß der Zeichnung ist, wie oben bereits hinsichtlich seiner Vorteile herausgestellt, die tiefste Stelle 11 des Einlaufrohrs 10 oberhalb eines Einlaufs 13 für die hintere Sprüheinrichtung 6 gelegen und bildet dabei eine leichte Abknickung im Rohrverlauf des Einlaufrohrs 10 aus. Dies ist für eine Spritzgußfertigung herstellungstechnisch günstig, da an der Knickstelle 11 zwei Formkerne aneinander stoßen können, die gegenläufig zueinander (Richtungen e2, e3) entformt werden können.

In Figur 5 sind die einzelnen Teile 14, 15 mit Ihren Formkernlängen F1 einerseits und F2 sowie F3 andererseits (getrennt an der Knickstelle 11) schematisch gezeichnet. Die Entformungsrichtungen e1 sowie die zueinander gegenläufigen Entformungsrichtungen e2 und e3 für die Kerne F2 und F3 sind ebenfalls eingezeichnet.

Das aus den Teilen 14, 15 zusammengesetzte Einlaufrohr 10 kann insbesondere an einen oberen Spülkorb 4 angehängt und mit diesem beweglich sein. Gerade bei einem oberen Spülkorb 4 ist dies besonders sinnvoll, da dieser somit mitsamt dem Einlaufrohr höhenverlagerbar sein kann und so für sperriges Spülgut im Unterkorb oder für hohes Spülgut im Oberkorb Raum geschaffen werden kann.

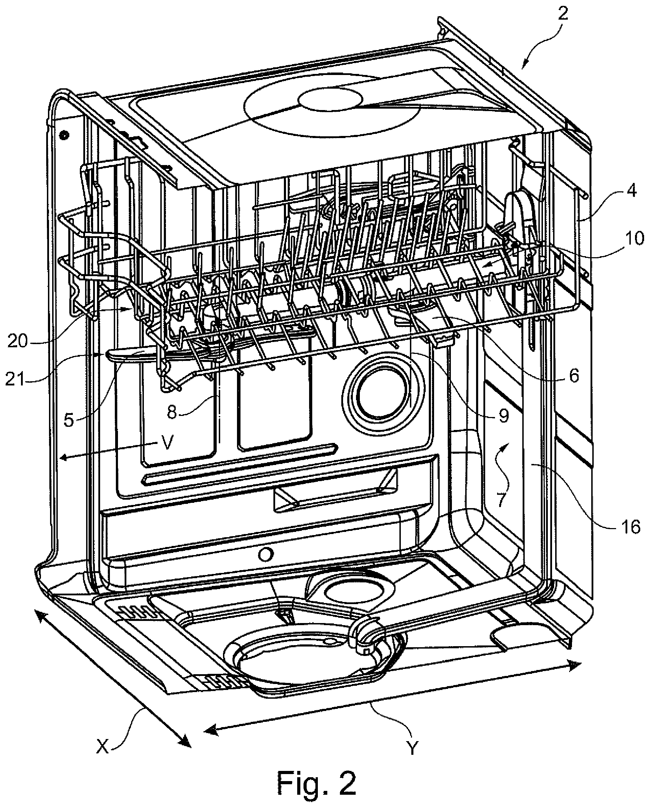

Um diese Beweglichkeit des Einlaufrohrs 10 mit dem Spülkorb 4 gegenüber einer fest stehenden, aufragenden Zuführleitung 16 zu ermöglichen, ist ein höhenverlagerbares Anschlußstück 17 - zum Beispiel über Gleitstücke - für die Versorgung des Einlaufrohrs aus der Zuführleitung 16 vorgesehen. Die Zuführleitung 16 selbst ist einem der Vorderseite V abgewandten hinteren Bereich des Spülbehälters 2 zugeordnet und entweder, wie in Figur 2 gezeichnet, mit im Spülbehälter 2 gelegen oder hinter dessen Rückwand 7.

Sofern, wie oben beschrieben, der Spülbehälter 2 eine Grundfläche mit einer gegenüber ihrer Quererstreckung x vergrößerten Tiefenerstreckung y aufweist, können beide Sprüheinrichtungen 5, 6 in der Quermitte hintereinander liegen, ohne sich zu berühren. Somit kann die große Tiefe des jeweils zu beaufschlagenden Spülkorbs 4 gleichmäßig von den Sprüheinrichtungen 5, 6 bearbeitet werden. Dadurch, dass die äußeren Düsen 21 der Sprüheinrichtungen 5, 6 jeweils noch ein Stück weit radial nach außen sprühen, sind die Arbeitsbereiche der Sprüharme größer als die von diesen überstrichenen Flächen und können sich auch überlappen.

Günstig ist die vordere Sprüheinrichtung 5 in einer derart in Richtung zur Vorderseite V versetzten Lage angeordnet, dass ein am vorderen, der Tür 3 zugewandten Ende des Spülkorbs 4 oder in der Tür 3 im Bereich 20 angeordneter Aufnahme- oder Auffangbehälter für Reinigungsmittel, insbesondere für in Festkörperform vorliegendes Reinigungsmittel, bevorzugt Reinigertabletten wie z.B. Merhphasen-Tabs, von einem aus dem Sprüharm 5 austretenden Strahl von Wasser FW und/oder Spülflotte S beaufschlagbar ist. Hier ist am oberen Spülkorb 4 eine Auffangschale aus beispielsweise Drahtgeflecht oder durchbrochenem Kunststoff vorgesehen, in die der Tab eingelegt wird oder von einem Behältnis an der Innenseite der Tür 3 nach deren Schließen hineinfällt. Dieser Aufnahmebehälter kann dann bei der Rotation der vorderen Sprüheinrichtung 5 über eine radial äußere Düse 21 direkt beaufschlagt werden. Ein dort befindlicher Tab oder ähnliches kann so gut gelöst und in die Spülflotte S eingebracht werden. Diese direkte Beaufschlagung und das damit verbundene Ausspülen des Aufnahmebehälters kann etwa durch einen senkrecht nach oben austretenden Strahl am radial äußeren Ende des vorderen Sprüharms 5 bewirkt werden, da dieser hinreichend lang ist, dass er in seiner Rotation bis direkt unter den Auffangbehälter reicht.

Dadurch, dass das Einlaufrohr 10 mitsamt dem Anschlußstück 17 über zum Beispiel Haken 22 oder eine andere mechanische Verbindung an den oberen Geschirrkorb 5 angehängt und mit diesem beweglich ist, kann das Einlaufrohr 10 gemeinsam mit dem oberen Spülkorb 4 gegenüber dem Zuführrohr 16 höhenverstellbar sein, beispielsweise in mehreren Stufen von jeweils 1,5 bis 3,5 Zentimetern. Hier sind zwischen der untersten Stellung, in der der obere Spülkorb 4 zum Beispiel mit hohen Gläsern gut beladen werden kann, und seiner höchsten Stellung, in der im unteren Spülkorb erheblicher Raum für sperriges Gut geschaffen ist, zwei Stufen von jeweils 2,5 Zentimeter Höhe zu einem Gesamtverstellweg von fünf Zentimetern addierbar. Hierfür ist das hochkant erstreckte Anschlußstück 17 seitlich mit Gleitschiebern zur Bewegung gegenüber dem Zuführrohr 16 versehen. Eine solche Höhenverstellung ist hier nur für den oberen Spülkorb 4 eingezeichnet, da sie dort besonders sinnvoll ist. Der untere Spülkorb 4 bleibt hier stets in seiner tiefsten Stellung.

Zudem ist das Einlaufrohr 10 mit dem oberen Spülkorb 4 gegenüber dem Zuführrohr 16 auch in Richtung zur Vorderseite V verlagerbar, so dass es bei geöffneter Tür 3 mit dem Spülkorb 4 zwangsweise mit nach vorne gezogen werden kann.

Wie oben beschrieben, liegt hier das Einlaufrohr 10 mit den von diesem gespeisten Sprüheinrichtungen 5, 6 im wesentlichen in einer Ebene unterhalb des Spülkorbs 4, dem es zugeordnet ist. Dabei liegen die zumindest zwei von dem Einlaufrohr 10 gespeisten Sprüheinrichtungen 5, 6 noch weiter nach unten versetzt, in einer Ebene unterhalb des Einlaufrohrs 10. Damit kann die Oberseite des Einlaufrohrs 10 direkt mit Haken 22 oder ähnlichen Verbindungsmitteln zum Anhängen an den Spülkorb 4 versehen sein. So sind die Sprüheinrichtungen 5, 6 zwangsweise gemeinsam mit dem Spülkorb 4 höhenverlagerbar, so dass in jeder Höhenposition die Beaufschlagung in gleichbleibender Effektivität gewährleistet ist. Wenn mehrere Geschirrkörbe 4 übereinander vorgesehen sind, ist es insbesondere für den oberen Geschirrkorb 4 günstig, eine derartige Anordnung von Sprüheinrichtungen 5, 6 zu haben, um somit die Höhenverlagerbarkeit dieses Spülkorbes 4 und das Ausspülen einer vorderen Tab-Auffangschale zu ermöglichen. Zudem ist mit der vorliegenden Anordnung auch der Höhenaufbau sehr gering.

Im Rahmen der Erfindung kann es insbesondere auch vorteilhaft sein, wenn sich das Einlaufrohr nicht nur wie in den vorstehenden vorteilhaften Ausführungsbeispielen aus zwei Rohrteilen, sondern aus mehr als zwei Rohrabschnitten zusammensetzt. Dabei sind je zwei hintereinanderfolgende Rohrabschnitte jeweils nach dem vorstehend für zwei Rohrabschnitte aufgezeigten vorteilhaften Konstruktionsprinzip aneinandergekoppelt.

**Bezugszeichenliste:**

| | | | |
|---|---|---|---|
| 1 | Geschirrspülmaschine, | 27 | Richtung, |
| 2 | Spülbehälter, | 28 | Anschlagkante, |
| 3 | Tür, | 29 | Rastelement, |
| 3a | Schwenkachse, | 30 | Ausnehmung, |
| 4 | Spülkorb, | 31 | Steg, |
| 5 | Sprüheinrichtung, | 32 | Einlaufkanal, |
| 6 | Sprüheinrichtung, | 33 | taschenförmige Kontur, |
| 7 | Rückwand, | 34 | Verdickung, |
| 8 | Drehachse, | 35 | Längsachse, |
| 9 | Drehachse, | 36 | Längsachse, |
| 10 | Einlaufrohr, | 37 | Kontaktbereich, |
| 11 | tiefste Stelle, | 38 | Kontaktbereich, |
| 12 | Einlauf in die vordere Sprüheinrichtung, | 39 | Anformungen, |
| | | 40 | Einschnürung der Muffe, |
| 13 | Einlauf in die hintere Sprüheinrichtung, | 41 | fassförmige Aufweitung des Einsteckendes; |
| 14 | axial vorderer Teil, | | |
| 15 | axial hinterer Teil, | S | Spülflotte, |
| 16 | Zuführrohr, | V | Vorderseite |
| 17 | Anschlußstück, | FW | Frischwasser, |
| 18 | Einsteckende, | AW | Abwasser, |
| 19 | Spitze des Stegs, | x | Breitenerstreckung, |
| 20 | Bereich der Tab-Auffangschale, | y | Tiefenerstreckung, |
| 21 | äußere Düse, | F1 | Formkernlänge, |
| 22 | Haken, | F2 | Formkernlänge, |
| 23 | Muffe, | F3 | Formkernlänge, |
| 24 | federndes Element, | e1 | Entformungsrichtung, |
| 25 | Ausnehmung, | e2 | Entformungsrichtung, |
| 26 | Richtung, | e3 | Entformungsrichtung |

## Patentansprüche

1. Geschirrspülmaschine (1), insbesondere Haushaltsgeschirrspülmaschine, mit einem einen Aufnahmeraum für zumindest einen Spülkorb (4) bildenden Spülbehälter (2), wobei in dem zumindest einen Spülkorb (4) zu reinigendes Gut halterbar ist, das über zumindest eine dem jeweiligen Spülkorb (4) zugeordnete Sprüheinrichtung (5;6) mit Wasser (FW) und/oder Spülflotte (S) beaufschlagbar ist, wobei das Wasser (FW) und/oder die Spülflotte über zumindest eine Rohrleitung (10;16) der Sprüheinrichtung (5;6) zuführbar ist, wobei die zumindest eine Rohrleitung (10;16) eine mit zwei Auslässen (12;13) zur Versorgung von zwei Sprüheinrichtungen (5;6) versehenes und im wesentlichen horizontal verlaufendes Einlaufrohr (10) ist und über ihren axialen Verlauf geteilt und aus mehreren aufeinander folgenden Teilen (14;15) zusammengesetzt ist,
**dadurch gekennzeichnet,**
**dass** die aufeinander folgenden Teile (14;15) gegen eine azimutale Relativbewegung in Form einer Verdrehung aneinander lagegesichert sind, wobei an einem der Teile (14;15) ein schmaler, mit einer radialen Komponente ausgreifender Steg (31) vorgesehen ist und an dem anderen Teil (15;14) ein in Verbindungsstellung den Steg (31) aufnehmender Einlaufkanal (32).

2. Geschirrspülmaschine (1) nach Anspruch 1,
**dadurch gekennzeichnet,**
**dass** die aufeinanderfolgenden Teile (14;15) gegen axiale Relativbewegung (26;27) aneinander lagegesichert sind.

3. Geschirrspülmaschine (1) nach Anspruch 2,
**dadurch gekennzeichnet,**
**dass** an einem der Teile (14;15) ein Anschlag (28) vorgesehen ist und an dem anderen Teil (15;14) ein in Verbindungsstellung direkt oder indirekt gegen den Anschlag (28) federnder, integral angeformter Abschnitt (24).

4. Geschirrspülmaschine (1) nach Anspruch 3,
**dadurch gekennzeichnet,**
**dass** der federnde Abschnitt (24) einen dem Verbindungsbereich zugewandten Steg umfasst, der über einen Teilbereich des Umfangs ausgebildet und dort von einer Ausnehmung (25) hintergriffen ist.

5. Geschirrspülmaschine (1) nach einem der Ansprüche 2 bis 4,
**dadurch gekennzeichnet,**
**dass** eine axiale Verlagerung der Teile in auseinanderziehender Richtung (27) gegeneinander durch ein formschlüssig in eine gegenüberliegende Ausnehmung (30) eingreifendes Rastelement (29) verhindert ist.

6. Geschirrspülmaschine (1) nach einem der vorhergehenden Ansprüche,
**dadurch gekennzeichnet,**
**dass** die Verbindung der Teile (14;15) über eine rein axiale, eine formschlüssige Verbindung herstellende Druckbewegung bewirkbar ist.

7. Geschirrspülmaschine (1) nach einem der vorhergehenden Ansprüche,
**dadurch gekennzeichnet,**
**dass** die Breite des Einlaufkanals (32) gemessen quer zu dessen axialen Erstreckung gegenüber der größten Breite (34) des Stegs (31) gemessen quer zu dessen axialen Erstreckung ein Übermaß höchstens im Zehntelmillimeterbereich aufweist.

8. Geschirrspülmaschine (1) nach dem vorhergehenden Anspruch 7,
**dadurch gekennzeichnet,**
**dass** die Breite des Einlaufkanals (32) und/oder des Stegs (31) über seine axiale Erstreckung zur Bildung einer Einlaufhilfe beim Zusammenstecken der Teile (14;15) variiert.

9. Geschirrspülmaschine (1) nach einem der vorhergehenden Ansprüche,
**dadurch gekennzeichnet,**
**dass** die aufeinander folgenden Teile (14,15) gegen ein Verkanten gegeneinander aneinander lagegesichert sind.

10. Geschirrspülmaschine (1) nach einem der vorhergehenden Ansprüche,
**dadurch gekennzeichnet,**
**dass** zwischen einer Muffe (23) des einen Teils und einem Einsteckende (18) des anderen Teils zumindest zwei axial voneinander beabstandete und in den Zwischenraum zwischen Muffe (23) und Einsteckende (18) ragende Kontaktbereiche (37;38) zur radialen Fixierung von Muffe und Einsteckende gegeneinander vorgesehen sind.

11. Geschirrspülmaschine (1) nach Anspruch 10,
**dadurch gekennzeichnet,**
**dass** der axiale Abstand der beiden Kontaktbereiche (37;38) zumindest 27 Milimeter beträgt.

12. Geschirrspülmaschine (1) nach einem der Ansprüche 10 oder 11, **dadurch gekennzeichnet,**
**dass** zumindest einer der Kontaktbereiche (37) einen in Umfangsrichtung, insbesondere azimutal umlaufenden Ring aufweist.

13. Geschirrspülmaschine (1) nach einem der vorhergehenden Ansprüche,
**dadurch gekennzeichnet,**
**dass** die aufeinander folgenden Teile (14;15) gegeneinander abgedichtet sind.

14. Geschirrspülmaschine (1) nach einem der Ansprüche 10 bis 12,
**dadurch gekennzeichnet,**
**dass** ein Einsteckende (18) des anderen Teils (15) mit einer radial wulstartig ausgreifenden Verbreiterung (41), insbesondere in Form eines Teil- oder Vollrings versehen ist.

15. Geschirrspülmaschine (1) nach einem der vorhergehenden Ansprüche,
**dadurch gekennzeichnet,**
**dass** die aufeinander folgenden Teile (14;15) ohne zusätzliche Teile allein durch Ausbildung der miteinander verbundenen Teile der Rohrleitung gegeneinander sowohl axial gesichert als auch verdrehgesichert als auch gegen ein Verkanten gesichert sind.

16. Geschirrspülmaschine (1) nach einem der vorhergehenden Ansprüche,
**dadurch gekennzeichnet,**
**dass** die Teile der Rohrleitung aus einem Kunststoff, insbesondere Polypropylen, ggf. mit Mineralverstärkung, jeweils einstückig gebildet sind.

17. Geschirrspülmaschine (1) nach einem der vorhergehenden Ansprüche,
**dadurch gekennzeichnet,**
**dass** zumindest eine Sprüheinrichtung (5) in einer in Richtung zur Vorderseite (V) des Spülbehälters (2) versetzten Lage angeordnet und eine weitere Sprüheinrichtung (6) als Zusatzsprühsystem mit einer oder mehreren weiteren Austrittsöffnungen für Wasser (FW) und/oder Spülflotte (S) vorgesehen ist, die gegenüber der ersten Sprüheinrichtung (5) von der Vorderseite (V) weg nach hinten versetzt ist, wobei beide Sprüheinrichtungen (5;6) von dem gemeinsamen, unterhalb des Spülkorbs (4) mit einer Komponente in Richtung zur Vorderseite (V) erstreckten Einlaufrohr (10) versorgbar sind.

18. Geschirrspülmaschine (1) nach einem der vorhergehenden Ansprüche,
**dadurch gekennzeichnet,**
**dass** das Einlaufrohr (10) im Spritzgußverfahren aus Kunststoff hergestellt ist.

19. Geschirrspülmaschine (1) nach einem der vorhergehenden Ansprüche,
**dadurch gekennzeichnet,**
**dass** das Einlaufrohr (10) an einen Spülkorb (4) angehängt und mit diesem beweglich ist.

20. Geschirrspülmaschine (1) nach einem der vorhergehenden Ansprüche,
**dadurch gekennzeichnet,**
**dass** ein höhenverlagerbares Anschlußstück (17) für die Versorgung des Einlaufrohrs (10) mit den Sprüheinrichtungen (5;6) aus einer zum Einlaufrohr (10) führenden und der Rückwand (7) des Spülbehälters (2) zugeordneten Zuführleitung (16) vorgesehen ist.

21. Geschirrspülmaschine (1) nach einem der vorhergehenden Ansprüche,
**dadurch gekennzeichnet,**
**dass** der Spülbehälter (2) eine rechteckige Grundfläche mit einer gegenüber seiner Quererstreckung (x) vergrößerten Tiefenerstreckung (y) aufweist.

## Claims

1. Dishwasher (1), in particular household dishwasher, having a dishwasher cavity (2) forming a receiving chamber for at least one washing basket (4), wherein items to be cleaned can be stored in the at least one washing basket (4) and can be applied with water (FW) and/or washing liquor (S) by way of at least one spray device (5; 6) assigned to the respective washing basket (4), wherein the water (FW) and/or the washing liquor can be fed to the spray device (5; 6) by way of at least one pipeline (10; 16), wherein the at least one pipeline (10; 16) is an inlet pipe (10) which is provided with two outlets (12; 13) for supplying two spray devices (5; 6) and which runs essentially horizontally and is divided across its axial course and composed of a number of consecutive parts (14; 15),
**characterised in that**
the consecutive parts (14; 15) are secured to one another against an azimuthal relative movement in the form of a rotation, wherein a narrow web (31) which spreads out with a radial component is provided on one of the parts (14; 15) and an inlet channel (32) receiving the web (31) in the connecting position is provided on the other part (15; 14).

2. Dishwasher (1) according to claim 1,
**characterised in that**
the consecutive parts (14; 15) are secured to one another against axial relative movement (26; 27).

3. Dishwasher (1) according to claim 2,
**characterised in that**
a stop (28) is provided on one of the parts (14; 15) and a segment (24), which is moulded integrally and flexes directly or indirectly against the stop (28) in the connecting position, is provided on the other part (15; 14).

4. Dishwasher (1) according to claim 3,
**characterised in that**
the flexing segment (24) comprises a web which faces the connection region, said web being embodied across a subregion of the periphery and being undercut there by a cut-out (25).

5. Dishwasher (1) according to one of claims 2 to 4,
**characterised in that**
an axial displacement of the parts in a direction (27) in which they are pulled apart from one another is prevented by a latching element (29) engaging in a form-fit manner in an opposite cut-out (30).

6. Dishwasher (1) according to one of the preceding claims,
**characterised in that**
the connection of the parts (14; 15) can be effected by way of a purely axial pressure movement producing a form-fit connection.

7. Dishwasher (1) according to one of the preceding claims,
**characterised in that**
the width of the inlet channel (32), measured at right angles to its axial extent compared with the largest width (34) of the web (31) measured at right angles to its axial extent, has an excess in the range of tenths of a millimetre at most.

8. Dishwasher (1) according to preceding claim 7,
**characterised in that**
the width of the inlet channel (32) and/or the web (31) varies across its axial extent in order to form an inlet aid when the parts (14; 15) are put together.

9. Dishwasher (1) according to one of the preceding claims,
**characterised in that**
the consecutive parts (14, 15) are secured to one another against becoming misaligned with one another.

10. Dishwasher (1) according to one of the preceding claims,
**characterised in that**
between a muffle (23) of the one part and an insertion end (18) of the other part, provision is made for at least two contact areas (37; 38), which are at an axial distance from one another and project into the intermediate space between the muffle (23) and the insertion end (18), for radially fixing the muffle and insertion end against one another.

11. Dishwasher (1) according to claim 10,
**characterised in that**
the axial distance of the two contact areas (37, 38) amounts to at least 27 millimetres.

12. Dishwasher (1) according to one of claims 10 or 11,
**characterised in that**
at least one of the contact areas (37) has a ring which extends in particular azimuthally in the peripheral direction.

13. Dishwasher (1) according to one of the preceding claims,
**characterised in that**
the consecutive parts (14; 15) are sealed against one another.

14. Dishwasher (1) according to one of claims 10 to 12,
**characterised in that**
an insertion end (18) of the other part (15) is provided with a widening (41) which spreads out radially in the manner of a bulge, in particular in the form of a partial or full ring.

15. Dishwasher (1) according to one of the preceding claims,
**characterised in that**
the consecutive parts (14; 15) are axially secured against one another without additional parts solely by embodying the parts of the pipeline which are connected to one another and also secured against turning and also against misalignment.

16. Dishwasher (1) according to one of the preceding claims,
**characterised in that**
the parts of the pipeline are formed from a plastic, in particular polypropylene, if applicable with mineral reinforcement, in each case embodied in one piece.

17. Dishwasher (1) according to one of the preceding claims,
**characterised in that**
at least one spray device (5) is arranged in a position offset in the direction of the front side (V) of the dishwasher cavity (2) and a further spray device (6) is provided as an additional spray system with one or more further exit openings for water (FW) and/or washing liquor (S), which is offset away from the front side (V) toward the rear compared with the first spray device (5), wherein both spray devices (5; 6) can be supplied by the shared inlet pipe (10) extending in the direction of the front side (V) below the washing basket (4) with one component.

18. Dishwasher (1) according to one of the preceding claims,
**characterised in that**
the inlet pipe (10) is produced from plastic using the injection moulding method.

19. Dishwasher (1) according to one of the preceding claims,
**characterised in that**
the inlet pipe (10) is suspended on a washing basket (4) and is moveable herewith.

20. Dishwasher (1) according to one of the preceding claims,
**characterised in that**
a height-adjustable connecting piece (17) is provided for supplying the inlet pipe (10) with the spray devices (5; 6) from a supply line (16) leading to the inlet pipe (10) and assigned to the rear wall (7) of the dishwasher cavity (2).

21. Dishwasher (1) according to one of the preceding claims,
**characterised in that**
the dishwasher cavity (2) has a rectangular base area with a depth (y) which is larger than its transverse width (x).

## Revendications

1. Lave-vaisselle (1), notamment lave-vaisselle à usage domestique, comprenant une cuve de lavage (2) formant un espace de logement pour au moins un panier de lavage (4), des produits à laver pouvant être maintenus dans l'au moins un panier de lavage (4), lesquels peuvent être alimentés en eau (FW) et/ou en eau de lavage (S) par l'intermédiaire d'au moins un dispositif d'arrosage (5 ; 6) associé au panier de lavage (4) respectif, l'eau (FW) et/ou l'eau de lavage pouvant être amenée(s) au dispositif d'arrosage (5 ; 6) par l'intermédiaire d'au moins une conduite (10 ; 16), l'au moins une conduite (10 ; 16) étant un tube d'entrée (10) s'étendant essentiellement horizontalement et muni de deux sorties (12, 13) pour l'alimentation de deux dispositifs d'arrosage (5 ; 6), et divisée sur son étendue axiale et assemblée à partir de plusieurs pièces successives (14 ; 15),
**caractérisé en ce**
**que** les pièces successives (14 ; 15) sont fixées en position l'une contre l'autre de manière à éviter un mouvement relatif azimutal sous forme d'une torsion, une nervure (31) étroite s'étendant avec une composante radiale étant ménagée sur l'une des pièces (14 ; 15) et un canal d'entrée (32) logeant la nervure (31) en position de liaison étant ménagé sur l'autre pièce (15 ; 14).

2. Lave-vaisselle (1) selon la revendication 1,
**caractérisé en ce**
**que** les pièces successives (14 ; 15) sont fixée en position l'une contre l'autre de manière à éviter un mouvement relatif axial (26 ; 27).

3. Lave-vaisselle (1) selon la revendication 2,
**caractérisé en ce**
**qu'**une butée (28) est ménagée sur l'une des pièces successives (14 ; 15) et en ce qu'une section (24) formée intégralement, directement ou indirectement élastique contre la butée (28) en position de liaison est ménagée sur l'autre pièce (15 ; 14).

4. Lave-vaisselle (1) selon la revendication 3,
**caractérisé en ce**
**que** la section (24) élastique comprend une nervure tournée vers la zone de liaison, laquelle nervure est réalisée sur une zone partielle de l'étendue et y est prise par l'arrière par un évidement (25).

5. Lave-vaisselle (1) selon l'une quelconque des revendications 2 à 4,
**caractérisé en ce**
**qu'**un déplacement axial des pièces en direction d'écartement (27) l'une contre l'autre est empêché par un élément d'encliquetage (29) ayant prise par adhérence de forme dans un évidement opposé (30).

6. Lave-vaisselle (1) selon l'une quelconque des revendications précédentes,
**caractérisé en ce**
**que** la liaison des pièces (14 ; 15) peut être obtenue par l'intermédiaire d'un mouvement de pression purement axial établissant une liaison par adhérence de forme.

7. Lave-vaisselle (1) selon l'une quelconque des revendications précédentes,
**caractérisé en ce**
**que** la largeur du canal d'entrée (32), mesurée transversalement à son étendue axiale, présente par rapport à la plus grande largeur (34) de la nervure (31), mesurée transversalement à son étendue axiale, un surdimensionnement au maximum dans la plage des dixièmes de millimètres.

8. Lave-vaisselle (1) selon la revendication précédente 7,
**caractérisé en ce**
**que** la largeur du canal d'entrée (32) et/ou de la nervure (31) varie sur son étendue axiale pour former une aide d'entrée lors de l'assemblage des pièces (14 ; 15).

9. Lave-vaisselle (1) selon l'une quelconque des revendications précédentes,
**caractérisé en ce**
**que** les pièces successives (14 ; 15) sont fixées en position l'une contre l'autre de manière à éviter un fléchissement l'une contre l'autre

10. Lave-vaisselle (1) selon l'une quelconque des revendications précédentes,
**caractérisé en ce**
**que**, entre un manchon (23) d'une pièce et une extrémité d'emboîtement (18) de l'autre pièce, au moins deux zones de contact (37 ; 38) distancées axialement l'une de l'autre et faisant saillie dans l'espace intermédiaire entre le manchon (23) et l'extrémité d'emboîtement (18) sont ménagées pour la fixation radiale l'un contre l'autre du manchon et l'extrémité d'emboîtement.

11. Lave-vaisselle (1) selon la revendication 10,
**caractérisé en ce**
**que** l'écart axial entre les deux zones de contact (37 ; 38) est d'au moins 27 millimètres.

12. Lave-vaisselle (1) selon l'une quelconque des revendications 10 ou 11,
**caractérisé en ce**
**qu'**au moins une des zones de contact (37) présente un anneau périphérique, notamment azimutal, en direction circonférentielle.

13. Lave-vaisselle (1) selon l'une quelconque des revendications précédentes,
**caractérisé en ce**
**que** les pièces successives (14 ; 15) sont mutuellement étanchéifiées.

14. Lave-vaisselle (1) selon l'une quelconque des revendications 10 à 12,
**caractérisé en ce**
**qu'**une extrémité d'emboîtement (18) de l'autre pièce (15) est munie d'un élargissement (41) s'étendant radialement en forme de bourrelet, notamment en forme d'un anneau partiel ou d'un anneau plein.

15. Lave-vaisselle (1) selon l'une quelconque des revendications précédentes,
**caractérisé en ce**
**que** les pièces successives (14 ; 15) sont fixées, sans pièces supplémentaires, aussi bien axialement que de manière à éviter la torsion et un fléchissement, uniquement en raison de la réalisation des pièces de la conduite reliées entre elles l'une par rapport à l'autre.

16. Lave-vaisselle (1) selon l'une quelconque des revendications précédentes,
**caractérisé en ce**
**que** les pièces de la conduite sont respectivement réalisées d'une seule pièce dans une matière plastique, notamment en polypropylène, éventuellement avec renforcement minéral.

17. Lave-vaisselle (1) selon l'une quelconque des revendications précédentes,
**caractérisé en ce**
**qu'**au moins un dispositif d'arrosage (5) est disposé dans une position décalée en direction du côté avant (V) de la cuve de lavage (2) et en ce qu'un dispositif d'arrosage supplémentaire (6) est ménagé comme système d'arrosage supplémentaire avec une ou plusieurs ouvertures de sortie supplémentaires pour l'eau (FW) et/ou l'eau de lavage (S), lequel, par rapport au premier dispositif d'arrosage (5), est décalé vers l'arrière en s'éloignant du côté avant (V), les deux dispositifs d'arrosage (5 ; 6) pouvant être alimentés par le tube d'entrée (10) commun s'étendant en dessous du panier de lavage (4) avec une composante en direction du côté avant (V).

18. Lave-vaisselle (1) selon l'une quelconque des revendications précédentes,
**caractérisé en ce**
**que** le tube d'entrée (10) est réalisé en matière plastique selon le procédé de moulage par injection.

19. Lave-vaisselle (1) selon l'une quelconque des revendications précédentes,
**caractérisé en ce**
**que** le tube d'entrée (10) est accroché à un panier de lavage (4) et est déplaçable avec celui-ci.

20. Lave-vaisselle (1) selon l'une quelconque des revendications précédentes,
**caractérisé en ce**
**qu'**une pièce de raccordement (17) déplaçable en hauteur est ménagée pour l'alimentation du tube d'entrée (10) avec les dispositifs d'arrosage (5 ; 6) à partir d'une conduite d'alimentation (16) menant au tube d'entrée (10) et associée à la paroi arrière (7) de la cuve de lavage (2).

21. Lave-vaisselle (1) selon l'une quelconque des revendications précédentes,
**caractérisé en ce**
**que** la cuve de lavage (2) présente une surface de base rectangulaire avec une étendue en profondeur (y) agrandie par rapport à son étendue transversale (x).
